(19) Europäisches Patentamt / European Patent Office / Office européen des brevets

(11) **EP 4 113 168 A1**

(12) **EUROPEAN PATENT APPLICATION**
published in accordance with Art. 153(4) EPC

(43) Date of publication:
**04.01.2023 Bulletin 2023/01**

(21) Application number: **20925030.7**

(22) Date of filing: **20.03.2020**

(51) International Patent Classification (IPC):
**G01S 17/08** (2006.01)    **G01S 7/481** (2006.01)

(52) Cooperative Patent Classification (CPC):
**G01S 7/481; G01S 17/08**

(86) International application number:
**PCT/CN2020/080508**

(87) International publication number:
**WO 2021/184381 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129, (CN)**

(72) Inventors:
• **HU, Chihao
  Shenzhen, Guangdong 518129 (CN)**
• **YAN, Lei
  Shenzhen, Guangdong 518129 (CN)**
• **XIONG, Wei
  Shenzhen, Guangdong 518129 (CN)**

(74) Representative: **Maiwald GmbH
Elisenhof
Elisenstraße 3
80335 München (DE)**

(54) **RANGING SYSTEM AND VEHICLE**

(57)    A distance measurement system (901, 902, 903, 904, 905 and 1001) and a vehicle (106) are provided. The distance measurement system (901, 902, 903, 904, 905 and 1001) includes a scanning module (200) and a distance measurement module (203). The distance measurement module (203) is configured to: emit laser light to the scanning module (200), and receive reflected light transmitted by the scanning module (200). The scanning module (200) includes a moving component (201) and a lens group (202). The moving component (201) is configured to drive the lens group (202) to perform scanning. The lens group (202) is further configured to: receive reflected light of a measured object (204) in an environment of the distance measurement system (901, 902, 903, 904, 905 and 1001), and transmit the reflected light to the distance measurement module (203). In this way, the scanning module (200) and the distance measurement module (203) are disposed separately, so that a weight of the scanning module (200) is reduced, the moving component (201) can rotate rapidly, and scanning efficiency is improved. In addition, the distance measurement module (203) does not rotate with the scanning module (200) when working. This reduces electrical connection difficulty of the distance measurement module (203).

FIG. 6

EP 4 113 168 A1

## Description

### TECHNICAL FIELD

Embodiments of this application relate to the field of laser distance measurement technologies, and in particular, to a distance measurement system and a vehicle.

### BACKGROUND

With the development of modern science and technology, an autonomous driving service of vehicles develops rapidly. During autonomous driving, the vehicle needs to measure a distance between the vehicle and an obstacle, a road guardrail, or another vehicle, to avoid the obstacle, correct lane deviation, and keep a safe distance. Therefore, a distance measurement system is usually mounted on the vehicle to measure a distance between the vehicle and another object, to provide data reference for implementing autonomous driving of the vehicle.

The distance measurement system includes a motor, a turntable disposed on the motor, and an optoelectronic device disposed on the turntable. The turntable provided with the optoelectronic device is heavy and large, and the motor has high power consumption and cannot rotate rapidly, so that a scanning frequency of the distance measurement system is reduced and measurement precision of the distance measurement system is affected.

### SUMMARY

Embodiments of this application provide a distance measurement system and a vehicle, to resolve a problem of a low scanning frequency of the distance measurement system.

To achieve the foregoing objective, this application uses the following technical solution. According to a first aspect, a distance measurement system is provided, including a scanning module, a distance measurement module, and a transmit lens and a receive lens that are disposed between the scanning module and the distance measurement module. The distance measurement module is configured to: transmit laser light to the scanning module through the transmit lens, and receive, through the receive lens, reflected light transmitted by the scanning module. The scanning module includes a moving component and a lens group. The moving component is configured to drive the lens group to perform scanning, and the lens group is further configured to receive reflected light of a measured object in an environment of the distance measurement system, and transmit the reflected light to the distance measurement module. The transmit lens is embedded into the receive lens, and a principal optical axis of the transmit lens is separated from a principal optical axis of the receive lens. Therefore, the scanning module and the distance measurement module are disposed separately. Only the lens group configured to adjust a direction of laser light or a direction of the reflected light is mounted on the moving component, and no heavy distance measurement module is mounted, so that a weight of the scanning module is reduced. Therefore, the moving component can rotate rapidly, thereby improving scanning efficiency. The distance measurement system can rapidly scan the measured object in a measurement area to meet a requirement of an autonomous driving vehicle. In addition, the distance measurement module is separated from the scanning module. Therefore, the distance measurement module does not rotate with the scanning module when working. This reduces electrical connection difficulty of the distance measurement module. In addition, the transmit lens and the receive lens are designed in an off-axis manner, so that focal lengths of the transmit lens and the receive lens, locations of a transmitter and a receiver may be adjusted based on a specific design requirement. Therefore, the design is more flexible. The transmit lens is embedded into the receive lens, so that an optical path for transmitting light and an optical path for reflecting light can be shared. This design can reduce an area required by a reflector in the lens group, further reduces a size of the distance measurement system, and facilitates miniaturization of the distance measurement system.

In an optional implementation, the principal optical axis of the transmit lens is parallel to the principal optical axis of the receive lens. In this way, the principal optical axes of the transmit lens and the receive lens can be prevented from overlapping, and a receive-end focal length and a transmit-end focal length can be designed separately. This improves design flexibility and improves measurement precision. In addition, an optical path of the transmit lens and an optical path of the receive lens are fully shared, so that the area required by the reflector in the lens group can be further reduced, and the size of the distance measurement system can be further reduced. This facilitates miniaturization of the distance measurement system.

In an optional implementation, the transmit lens and the receive lens are integrally formed through mold pressing. In this way, the connection is more stable.

In an optional implementation, an opening is provided on the receive lens, and the transmit lens is connected to the opening of the receive lens in an adhesive manner. In this way, the transmit lens and the receive lens are assembled and disassembled more conveniently.

In an optional implementation, the distance measurement module includes a laser and a receiver. The laser is configured to emit laser light to the scanning module. The receiver is configured to receive reflected light transmitted by the scanning module. The laser and the receiver are located on a same side of the scanning module. Therefore, the laser and the receiver are located on the same side of the scanning module, so that the size of the distance measurement system can be further reduced, and space occupied by the distance measurement system can be reduced.

In an optional implementation, the laser is located at a focus position of the transmit lens, and the transmit lens is configured to convert the laser light emitted by the laser into parallel light rays. The receiver is located at a focus position of the receive lens. The receive lens is configured to focus the reflected light transmitted by the scanning module. Therefore, the laser is located at the focus position of the transmit lens, so that the transmit lens can fully receive the laser light emitted by the laser. The receiver is located at the focus position of the receive lens, so that the receiver can fully receive the reflected light focused by the receive lens.

In an optional implementation, one or more first reflectors are disposed between the transmit lens and the laser, and the reflector group is configured to fold an optical path between the laser and the transmit lens, and reflect, to the transmit lens, the laser light emitted by the laser. Therefore, the first reflector is disposed between the transmit lens and the laser, so that the optical path between the transmit lens and the laser can be folded. This can reduce the size of the distance measurement system, and facilitates miniaturization of the distance measurement system.

In an optional implementation, a second reflector is disposed between the receive lens and the receiver, and the second reflector is configured to fold an optical path between the receive lens and the receiver, and reflect, to the receiver, reflected light that passes through the receive lens. Therefore, the first reflector is disposed between the receive lens and the receiver, so that the optical path between the receive lens and the receiver can be folded. This can reduce the size of the distance measurement system, and facilitates miniaturization of the distance measurement system.

In an optional implementation, the lens group includes one or more reflectors. In this way, scanning efficiency of the scanning module is improved.

In an optional implementation, there are one or more lasers, and the plurality of lasers are surface-mounted on a same circuit board. In this way, assembling difficulty is reduced, and space occupation is reduced.

In an optional implementation, there are one or more receivers, and the plurality of receivers are surface-mounted on a same circuit board. In this way, assembling difficulty is reduced, and space occupation is reduced.

In an optional implementation, the distance measurement system further includes a processing module. The processing module is connected to the laser and the receiver. The processing module is configured to calculate a distance between the distance measurement module and the measured object based on a transmit time of the laser light, a receive time of the reflected light, and a speed of light. In this way, the distance between the distance measurement module and the measured object can be rapidly obtained, thereby improving working efficiency.

According to a second aspect, a vehicle is provided, including a vehicle body and the foregoing distance measurement system. The distance measurement system is disposed on the vehicle body. Therefore, the scanning module and the distance measurement module of the distance measurement system are disposed separately, so that a weight of the scanning module is reduced. Therefore, the scanning module can rotate rapidly, and the distance measurement system can rapidly scan and measure a distance between the vehicle and an object in a front area during distance measurement, thereby meeting a requirement of an autonomous driving vehicle.

In an optional implementation, the distance measurement system is disposed at a head, a rear, a body side, or a roof of the vehicle body. Therefore, a distance measurement system is disposed in a plurality of directions of the vehicle, so that an obstacle around the vehicle can be detected in time. This avoids collision of the vehicle.

In an optional implementation, the vehicle further includes an autonomous driving system. The autonomous driving system is connected to the distance measurement system, and configured to perform autonomous driving based on a distance measured by the distance measurement system. In this way, the autonomous driving system can avoid an obstacle around the vehicle based on the information detected by the distance measurement system. This improves safety of the autonomous driving vehicle.

## BRIEF DESCRIPTION OF DRAWINGS

FIG. 1a is a main view of a laser distance measurement system;
FIG. 1b is a left view of a laser distance measurement system;
FIG. 1c is a three-dimensional diagram of a laser distance measurement system;
FIG. Id is a schematic diagram of a working status of a laser distance measurement system;
FIG. 1e is a schematic diagram of a laser distance measurement system mounted on a vehicle;
FIG. 2 is a schematic diagram of a structure of a distance measurement system according to an embodiment of this application;
FIG. 3a is a schematic diagram of an optical path of a distance measurement system according to an embodiment of this application;
FIG. 3b is a schematic diagram of an optical path of another distance measurement system according to an embodiment of this application;
FIG. 3c is a schematic diagram of an optical path of still another distance measurement system according to an embodiment of this application;

FIG. 4 is a top view of a distance measurement system according to an embodiment of this application;
FIG. 5 is a three-dimensional diagram of a distance measurement system according to an embodiment of this application;
FIG. 6 is a three-dimensional diagram of another distance measurement system according to another an embodiment of this application;
FIG. 7 is a top view of another distance measurement system according to an embodiment of this application;
FIG. 8 is a main view of a lens according to an embodiment of this application;
FIG. 8a is a main view of another lens according to an embodiment of this application;
FIG. 9 is a schematic diagram of another structure of a lens according to an embodiment of this application;
FIG. 9a is a schematic diagram of another structure of a lens according to an embodiment of this application;
FIG. 10 is a schematic diagram of an optical path of yet another distance measurement system according to an embodiment of this application;
FIG. 11 is a schematic diagram of an optical path of still yet another distance measurement system according to an embodiment of this application;
FIG. 12 is an example diagram of a distance measurement system mounted on a vehicle according to an embodiment of this application; and
FIG. 13 is a schematic diagram of a structure of a vehicle according to an embodiment of this application.

## DESCRIPTION OF EMBODIMENTS

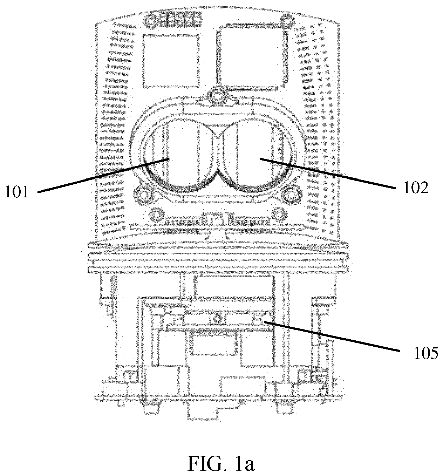

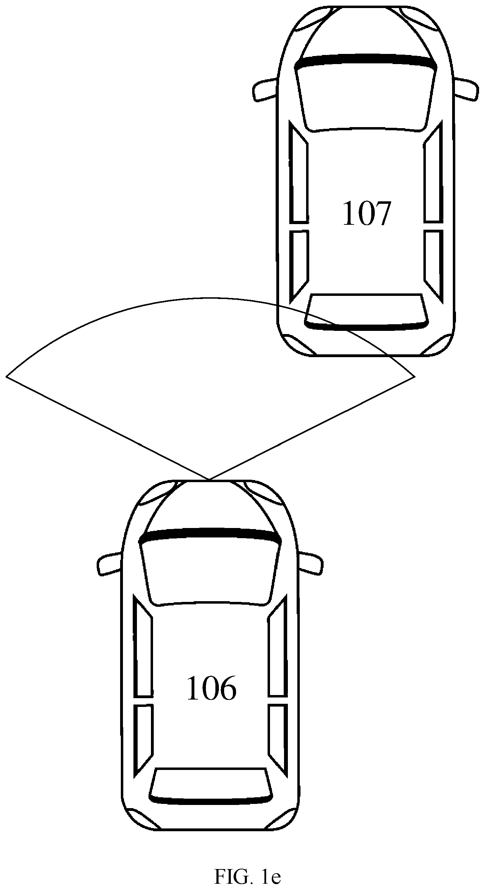

To make the objectives, technical solutions, and advantages of this application clearer, the following further describes this application in detail with reference to the accompanying drawings.
The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more of the features. In the descriptions of this application, unless otherwise stated, "a plurality of" means two or more than two.
In addition, in this application, position terms such as "top" and "bottom" are defined relative to positions of components in the accompanying drawings. It should be understood that these position terms are relative concepts used for relative description and clarification, and may correspondingly change based on changes in the positions of the components in the accompanying drawings.
An embodiment of this application provides a distance measurement system. For example, the distance measurement system may be applied to an automated device such as an autonomous driving vehicle or a robot, to detect an object in an ambient environment, so as to avoid or take away the object in time.
In some embodiments, the distance measurement system may be mounted on a head of the robot. When the robot moves, a distance between the robot and an obstacle may be measured through the distance measurement system, so as to walk around the obstacle.
In some other embodiments, the distance measurement system may be mounted on a head, a rear, a top, or a side of a vehicle. The vehicle may perform autonomous driving based on a distance, measured by the distance measurement system, between vehicles or between a vehicle and a fence. In actual application, the distance measurement system may alternatively be mounted at another location of the vehicle. This is not specifically limited in this embodiment of this application.
For example, as shown in FIG. 1e, an autonomous driving vehicle 106 may measure a distance between the autonomous driving vehicle 106 and an object in an ambient environment through a distance measurement system. Then, a computing system determines whether the distance is less than a safety distance. If the distance is less than the safety distance, it indicates that a distance between the autonomous driving vehicle 106 and an object in an environment around a vehicle ahead 107 is short. This easily causes a collision. Therefore, the autonomous driving vehicle 106 may automatically perform an avoidance operation to prevent a collision.
The distance measurement system may be disposed on a vehicle body of the autonomous driving vehicle. As shown in FIG. 1e, a scanning area of the distance measurement system is, for example, in a sector shape, and each distance measurement system may perform distance measurement on an object in a sector-shaped scanning area of the distance measurement system.

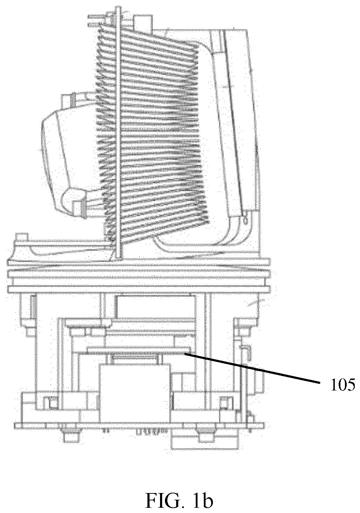

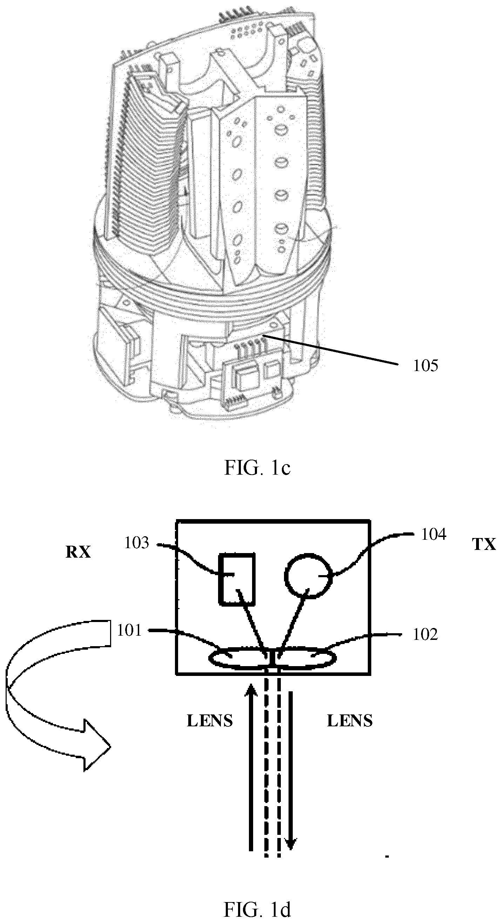

FIG. 1a, FIG. 1b, FIG. 1c, and FIG. 1d each show a distance measurement system. The distance measurement system continuously performs distance measurement on a vehicle in a front sector-shaped area by rotating a turntable 105. However, in the distance measurement system, a lens 101, a lens 102, a receiver 103, and a laser 104 are all disposed on the turntable 105. The turntable 105 bears a large weight. Therefore, the turntable 105 rotates slowly, but cannot rotate rapidly.
For example, as shown in FIG. 1e, a direction opposite to the lens 102 at a moment is just on a left side of the sector-shaped area, that is, the distance measurement system currently performs distance measurement on a vehicle on the left side of the sector-shaped area. However, in this case, the vehicle ahead 107 is merged into a lane of the autonomous driving vehicle 106 from a right lane. Because the turntable 105 of the distance measurement system on the autonomous driving vehicle 106 cannot rapidly rotate, the direction opposite to the lens 102 cannot be rapidly rotated to the right side of the sector-shaped area in time. Therefore, the distance measurement system cannot measure a distance to the vehicle ahead 107 in time. The autonomous driving vehicle cannot identify a location of the vehicle ahead 107 in time, and cannot perform a deceleration action in time to prevent a rear-end collision.

In conclusion, the autonomous driving vehicle 106 on which the distance measurement system is disposed cannot rapidly rotate a chassis 105. Therefore, when there is a vehicle ahead, a distance between the autonomous driving vehicle 106 and the vehicle ahead 107 cannot be measured in time. This easily causes a rear-end collision.

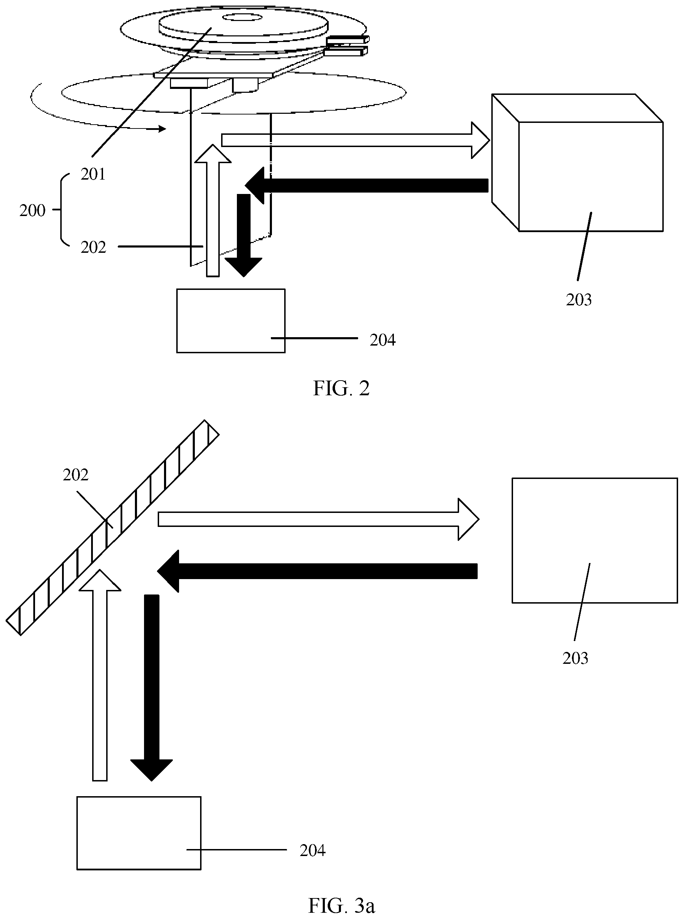

Therefore, an embodiment of this application provides a distance measurement system. FIG. 2 is a schematic diagram of a structure of a distance measurement system according to an embodiment of this application. The distance measurement system includes a scanning module 200 and a distance measurement module 203. The scanning module 200 and the distance measurement module 203 are disposed separately.

The distance measurement module 203 is configured to: transmit laser light to the scanning module 200, and receive reflected light transmitted by the scanning module 200.

The scanning module 200 includes a moving component 201 and a lens group 202. The moving component 201 is configured to drive the lens group 202 to perform scanning, so that the lens group 202 receives a light beam transmitted by the distance measurement module, and transmits the light beam to an environment of a distance measurement system device.

In addition, the lens group 202 is further configured to receive light reflected by one or more measured objects in the environment of the distance measurement system device, and focus the collected reflected light on the distance measurement module 203.

A specific structure of the moving component is not limited in this embodiment of this application. For example, the moving component 201 includes a motor and a turntable connected to the motor. In actual application, the moving component 201 may alternatively be a separate motor. This is not limited in this embodiment of this application. The lens group 202 may be mounted on the turntable or directly mounted on the motor. When the motor works, the motor drives the lens group 202 to perform rotary scanning. In comparison with the conventional technology in which both the scanning module 200 and the distance measurement module 203 are disposed on the moving component 201, there is no need to supply power to the distance measurement module 203 that rotates. This reduces electrical connection difficulty.

This embodiment of this application is described by using an example in which the moving component 201 includes the motor and the turntable connected to the motor. For another implementation solution of the moving component 201, refer to embodiments of this application. In this embodiment, the lens group 202 is mounted on the turntable, and a function of the lens group 202 may be: transmitting laser light (indicated by a black shadow arrow in FIG. 2) transmitted by the distance measurement module 203 to the measured object, or reflected light (indicated by a white shadow arrow in FIG. 2) reflected by the measured object to the distance measurement module 203.

In some embodiments, as shown in FIG. 2, the lens group 202 may be a planar reflector. As shown in FIG. 3a, laser light is transmitted to the measured object through the planar reflector, and the reflected light is transmitted to the distance measurement module 203 through the planar reflector.

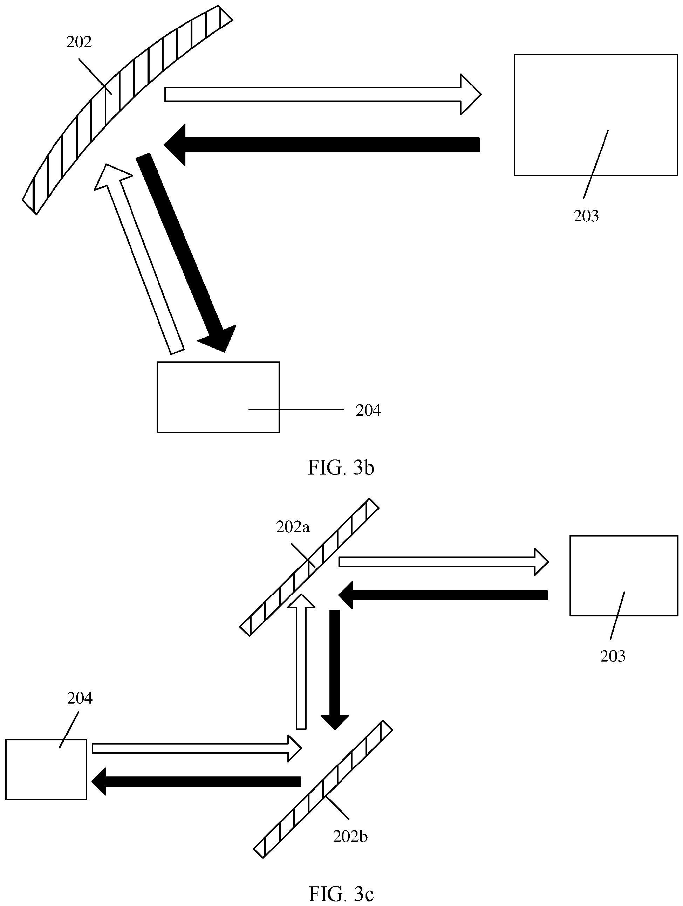

In some other embodiments, the lens group 202 may be a curved reflector. As shown in FIG. 3b, laser light is transmitted to the measured object through the curved reflector, and the reflected light is transmitted to the distance measurement module 203 through the curved reflector.

In some other embodiments, the lens group 202 may be two planar reflectors. As shown in FIG. 3c, laser light is transmitted by a first planar reflector group 202a to a second planar reflector group 202b, and then is transmitted to a measured object. Reflected light is transmitted by the second planar reflector group 202b to the first planar reflector group 202a, and then is transmitted to the distance measurement module 203.

In actual application, the lens group 202 may alternatively implement a function of the lens group 202 in another form. This is not specifically limited in this embodiment of this application.

According to this embodiment of this application, the turntable is configured to drive the lens group 202 to rotate around a central axis of the lens group 202. In some embodiments, as shown in FIG. 2, the lens group 202 is a planar reflector, and the turntable is connected to the planar reflector, so that the planar reflector rotates around a central axis. An emission angle of laser light or reflected light that passes through the lens group 202 correspondingly changes with rotation of the lens group 202. For example, if the lens group 202 rotates by one degree, the emission angle of the laser light or the reflected light of the lens group 202 correspondingly shifts by two degrees.

In this embodiment of this application, the turntable may be connected to a motor. The motor drives the turntable to rotate, so that the turntable can drive the lens group 202 to rotate. In actual application, the turntable may alternatively rotate in another manner. This is not limited in this embodiment of this application.

In a laser distance measurement system (as shown in FIG. 1a, FIG. 1b, FIG. 1c, and FIG. Id), the turntable 105 needs to drive the lens 101, the lens 102, the receiver 103, the laser 104, and the like to implement scanning of the distance measurement system. The turntable 105 may bear a large weight and rotates slowly. However, in this embodiment of this application, the turntable only needs to drive the lens group 202 to rotate to change directions of the laser light and the reflected light, to implement a scanning mode of the distance measurement system. Therefore, in this embodiment of this application, the turntable does not need to drive the distance measurement module 203. The turntable can implement rapid scanning and distance measurement as it bears a small weight and rotates rapidly.

In the foregoing laser distance measurement system, both the laser 104 and the receiver 103 that rotate on the turntable 105 need to be powered to work. This leads to many disadvantages in supplying power to an object that rotates on the turntable, such as increase of circuit costs, increase of power consumption, and increase of a weight. Compared with this solution, the distance measurement system provided in this embodiment of this application does not need to supply power to an object that rotates on the turntable (the lens group 202 does not need to be powered), so that disadvantages of using a slip ring or wireless power supply can be avoided.

In addition, in this embodiment of this application, the distance measurement module 203 is not mounted on the turntable. Therefore, a power supply corresponding to the distance measurement module 203 may be disposed at a fixed location.

In the distance measurement system provided in this embodiment of this application, the scanning module 200 and the distance measurement module 203 are disposed separately, and the scanning module 200 does not need to bear a large weight. Therefore, the scanning module 200 rotates rapidly. This increases a scanning speed, and can implement a very high detection frame rate. In addition, a load of the moving component may be reduced, so that power consumption and costs of the moving component are reduced, and reliability and a working life of the motor are improved.

In addition, the distance measurement module is separated from the scanning module. Therefore, the distance measurement module does not rotate with the scanning module when working. This reduces electrical connection difficulty of the distance measurement module.

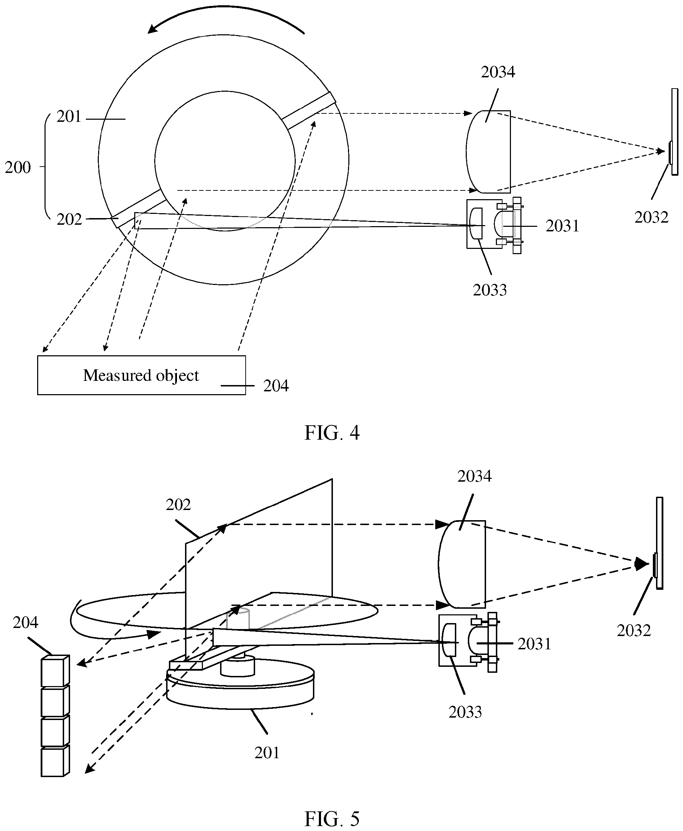

In some embodiments, as shown in FIG. 4, the distance measurement module 203 includes a laser 2031 and a receiver 2032. The distance measurement system further includes a transmit lens 2033 disposed between the laser 2031 and the scanning module 200, and a receive lens 2034 disposed between the receiver 2032 and the scanning module 200.

The laser 2031 may be configured to emit laser light to the lens group 202, and the laser light is transmitted by the transmit lens 2033 to irradiate on a measured object 204. The receiver 2032 may be configured to receive reflected light from the measured object 204.

In a horizontal direction, after being optically shaped through the transmit lens 2033, the laser light emitted by the laser 2031 is reflected through the lens group 202 on the turntable 201, and then reaches the measured object 204. The reflected light reflected by the measured object 204 reaches the receive lens 2034 after passing through the lens group 202. After being optically shaped through the receive lens 2034, the reflected light reaches the receiver 2032. The lens group 202 may be a planar reflector.

In this embodiment, in the horizontal direction, the transmit lens 2033 is configured to optically shape the laser light, and the receive lens 2034 is configured to optically shape the reflected light. An optical path for transmitting the laser light and an optical path for receiving the reflected light are not shared. The two optical paths occupy much horizontal space. In this case, the lens group 202 with a large horizontal width is required to meet a design requirement. In addition, because a transmit optical path is not at a location close to the center, transmit light may exceed an edge of the lens group 202 after the transmit optical path is rotated to some extent. This leads to a decrease of a scanning range.

For another example, in some embodiments, as shown in FIG. 5, in a vertical direction, after being optically shaped through the transmit lens 2033, laser light emitted by the laser 2031 is reflected through the lens group 202 on the turntable 201, and then reaches the measured object 204. The reflected light reflected by the measured object 204 reaches the receive lens 2034 after passing through the lens group 202. After being optically shaped through the receive lens 2034, the reflected light reaches the receiver 2032. The lens group 202 may be a planar reflector.

In this embodiment, in the vertical direction, the transmit lens 2033 is configured to optically shape the laser light, and the receive lens 2034 is configured to optically shape the reflected light. An optical path for transmitting the laser light and an optical path for receiving the reflected light are not shared. The two optical paths occupy much vertical space. In this case, the lens group 202 with a large vertical height is required to meet a design requirement. Especially, for autonomous driving detection, a large vertical direction needs to be detected as much as possible. Therefore, a divergence angle in the vertical direction of the laser is also large. In this case, a height of a rotating mirror occupied by the laser is close to a receive height, and the height of the rotating mirror increases nearly twice.

With reference to the distance measurement system shown in FIG. 4 and FIG. 5, the optical path for transmitting the laser light and the optical path for receiving the reflected light are not shared. Consequently, a length of the reflector or the lens group 202 is required to be large in both the horizontal direction and the vertical direction, and an area of the reflector or the lens group 202 is required to be large. This finally leads to a large size of the distance measurement system. In addition, the design is more obvious when a divergence angle of a laser beam increases. Therefore, this design causes a significant increase of the size of the entire distance measurement system in the horizontal direction or the vertical direction.

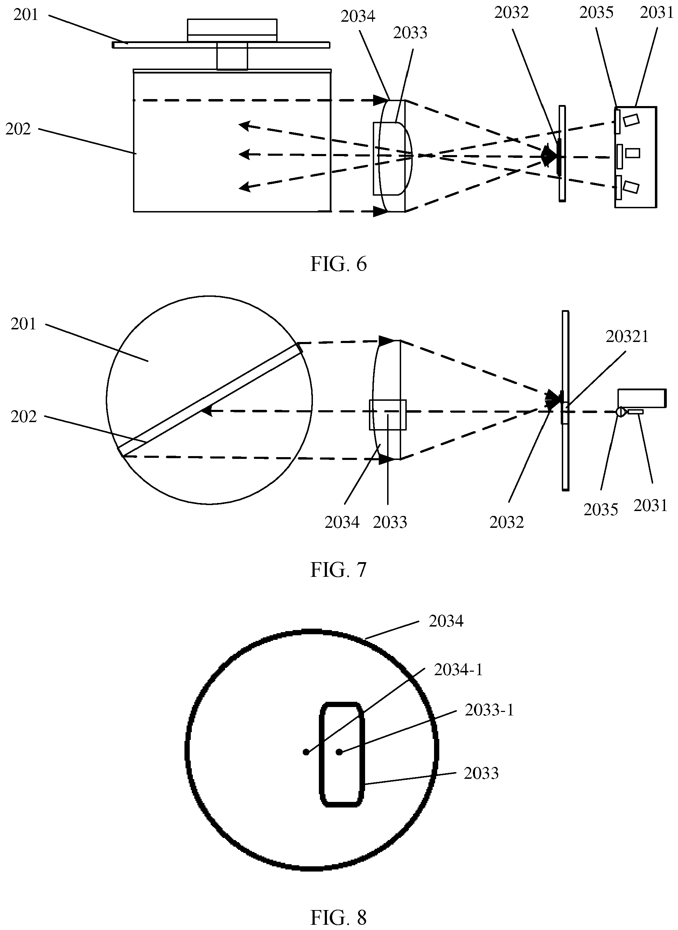

To resolve the technical problem of a large size of the distance measurement system shown, for example, in FIG. 4 or FIG. 5, as shown in FIG. 6 or FIG. 7, an embodiment of this application further provides another embodiment of a distance measurement system. FIG. 6 is a main view of another distance measurement system according to an embodiment of this application. FIG. 7 is a top view of another distance measurement system according to an embodiment of this application. The distance measurement system includes the distance measurement module 203, the lens group 202, and the moving component 201. The distance measurement module 203 includes the laser 2031 and the receiver 2032. The distance measurement system further includes the transmit lens 2033 disposed between the laser 2031 and the scanning module 200, and the receive lens 2034 disposed between the receiver 2032 and the scanning module 200.

The transmit lens 2033 may shape laser light emitted by the laser 2031, and the receive lens 2034 may shape emitted light reflected by a measured object. For a specific description, refer to the foregoing embodiment. Details are not described herein again.

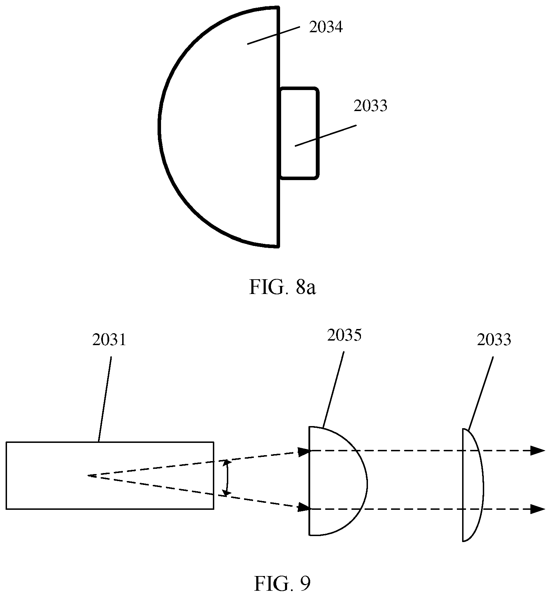

As shown in FIG. 7 and FIG. 8, a principal optical axis of the transmit lens 2033 and a principal optical axis of the receive lens 2034 are not coaxial, for example, a focal length of the transmit lens 2033 and a focal length of the receive lens 2034 may be different.

Therefore, the focal length of the transmit lens 2033 and the focal length of the receive lens 2034 may be adjusted according to a specific design requirement, so that a design is more flexible.

In some embodiments, the transmit lens 2033 may be embedded into the receive lens 2034, so that an optical path for transmitting light and an optical path for reflecting light can be shared. To clearly describe the solution of this application, the following uses FIG. 6, FIG. 7, FIG. 8, and FIG. 8a as examples for a detailed description.

As shown in FIG. 8, the transmit lens 2033 is embedded into the receive lens 2034. In addition, a center 2033-1 of the transmit lens 2033 does not coincide with a center 2034-1 of the receive lens 2034. The principal optical axis of the transmit lens 2033 passes through, for example, the center 2033-1, and the principal optical axis of the receive lens 2034 passes through, for example, the center 2034-1 of the receive lens 2034. In an implementation of this application, the principal optical axis of the transmit lens 2033 is parallel to the principal optical axis of the receive lens 2034, so that an optical path for transmitting light and an optical path for reflecting light can be shared.

A manner of connecting the transmit lens 2033 to the receive lens 2034 is not limited in this embodiment of this application. In an implementation of this application, the transmit lens 2033 and the receive lens 2034 are integrated through mold pressing.

In an implementation of this application, an opening is provided on the receive lens 2034, and the transmit lens 2033 is connected to the opening of the receive lens 2034 in an adhesive manner.

As shown in FIG. 8a, a half edge of the receive lens 2034 may also be removed, so that the transmit lens 2033 is fastened to a notch location of the receive lens 2034. The transmit lens 2033 and the receive lens 2034 may be integrally formed, or may be connected together in an adhesive manner.

An arrangement manner of the transmit lens 2033 and the receive lens 2034 is not limited in this embodiment of this application, provided that a center of the transmit lens 2033 and a center of the receive lens 2034 are staggered. Mutual interference between the laser light transmitted by the laser 2031 and the reflected light transmitted by the scanning module 200 can be avoided, so that the focal length of the transmit lens 2033 and the focal length of the receive lens 2034 may be different. In addition, the transmit lens 2033 is embedded into the receive lens 2034, and a principal optical axis of the transmit lens 2033 is parallel to a principal optical axis of the receive lens 2034, so that an optical path for transmitting light and an optical path for reflecting light can be shared. This design can reduce an area required by a reflector in the lens group, further reduces a size of the distance measurement system, and facilitates miniaturization of the distance measurement system.

A manner of molding the transmit lens 2033 and the receive lens 2034 is not limited in this embodiment of this application. The transmit lens 2033 and the receive lens 2034 may be molded once, or may be formed by bonding a plurality of lens groups 202.

A manner of disposing the laser 2031 is not limited in this application. In some embodiments, the laser 2031 may be mounted on a printed circuit board (printed circuit board, PCB). The laser 2031 may use an unpackaged laser bare die (bare die). Therefore, space occupied by the laser 2031 can be reduced, so that the size of the distance measurement system can be further reduced.

Specifically, the unpackaged laser bare die may be mounted on the PCB, and wire bonding (wire bonding) is performed by using a gold wire, to connect the laser bare die to a processing module. The processing module may be configured to calculate a distance between the distance measurement module 203 and the measured object 204. When the laser 2031 uses the unpackaged laser bare die, the distance measurement module 203 can be more miniaturized. In actual application, the laser 2031 may be a continuous laser or a pulse laser. A type of the laser 2031 is not specifically limited in this embodiment of this application.

A manner of disposing the receiver 2032 is not limited in this application. In some embodiments, the receiver 2032 may be mounted on a PCB. The receiver 2032 may use an unpackaged receiver bare die. Therefore, space occupied by the receiver 2032 can be reduced, so that the size of the distance measurement system can be further reduced.

Specifically, the unpackaged receiver bare die may be mounted on the PCB, and wire bonding is performed by using a gold wire, to connect receiver bare die to a processing module. When the receiver 2032 uses the unpackaged receiver bare die, the distance measurement module 203 can be more miniaturized. In some embodiments, the receiver 2032 may be an avalanche photon diode (avalanche photon diode, APD) that has features of a high-speed response, a high gain, a low junction capacitance, and low noise, and is very suitable for laser distance measurement.

In this embodiment, the laser 2031 and the receiver 2032 are, for example, located on a same side of the scanning module 200, so that the size of the distance measurement system can be reduced. This reduces space occupied by the distance measurement system.

In some embodiments, as shown in FIG. 7, the receiver 2032 is located between the laser 2031 and the scanning module 200. For example, a through hole 20321 is disposed on a PCB of the receiver. Laser light emitted by the laser 2031 may pass through the through hole 20321 and converge on the transmit lens 2033.

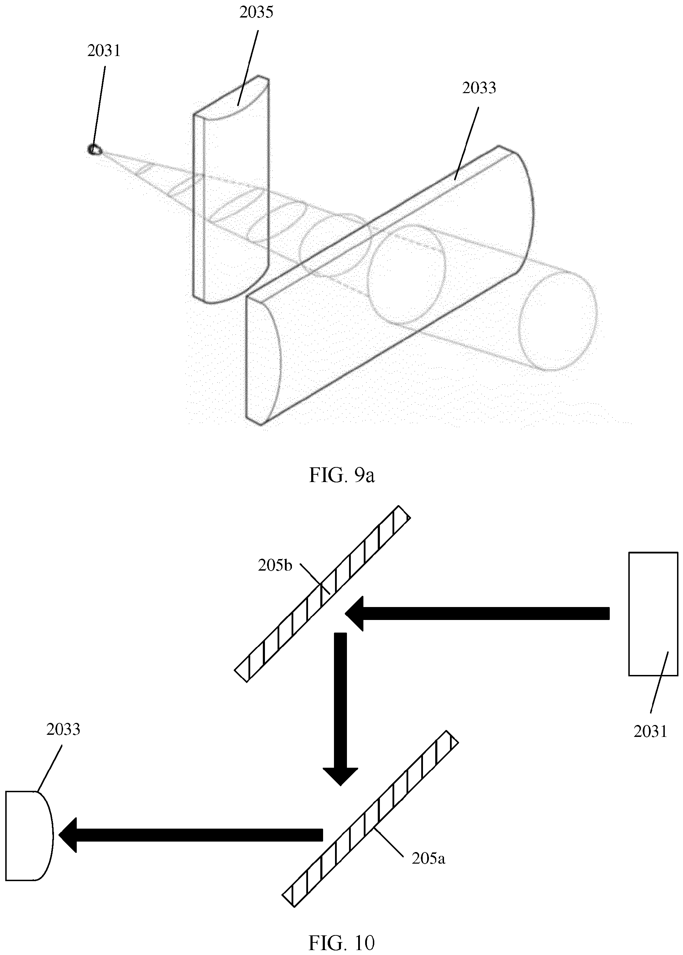

Specific structures of the transmit lens 2033 and the receive lens 2034 are not limited in this embodiment of this application. The transmit lens 2033 and the receive lens 2034 may be convex lenses, concave lenses, or lenses in other forms. In an implementation of this application, the transmit lens 2033 is, for example, a convex lens. In another implementation of this application, as shown in FIG. 9a, the transmit lens 2033 is, for example, a cylindrical lens.

The transmit lens 2033 is, for example, located between the laser 2031 and the scanning module 200, and is configured to convert the laser light emitted by the laser 2031 into parallel light rays. The laser 2031 is disposed, for example, at a focus position of the transmit lens 2033, and the laser light emitted by the laser 2031 may be integrated into parallel laser light after being processed by the transmit lens 2033. Finally, the laser light reaches the measured object 204 after being reflected by the lens group 202.

The receive lens 2034 is, for example, located between the receiver 2032 and the scanning module 200, and is configured to focus the reflected light transmitted by the scanning module 200. The reflected light reflected by the measured object 204 reaches the receive lens 2034 after being reflected by the lens group 202. The receive lens 2034 may have a function of focusing light. The reflected light may be focused when passing through the receive lens 2034, and finally converges to a focus position. Therefore, the receiver 2032 may be disposed at the focus position of the receive lens 2034, to receive more reflected light and improve sensitivity of the distance measurement system.

FIG. 9 is a top view of another distance measurement system according to an embodiment of this application. As shown in FIG. 9, a convergence lens 2035 is further disposed between the laser 2031 and the transmit lens 2033. The convergence lens 2035 may preliminarily shape laser light emitted by the laser 2031, and converge the laser light emitted by the laser to a central location of the transmit lens 2033.

A structure of the convergence lens 2035 is not limited in this embodiment of this application. The convergence lens 2035 may be a convex lens, a concave lens, or a lens in another form. In an implementation of this application, as shown in FIG. 9a, the transmit lens 2035 is, for example, a cylindrical lens.

Laser light emitted by the laser 2031 passes through the convergence lens 2035 and the transmit lens 2033, and is reflected to the measured object 204 through the lens group 202. The reflected light reflected by the measured object 204 is reflected to the receive lens 2034 through the lens group 202, and is reflected to the receiver 2032 through the receive lens 2034.

In some embodiments, several reflectors may be disposed between the transmit lens 2033 and the laser 2031, to form a "Z"-shaped optical path. This may further reduce a size of the distance measurement module 203. Similarly, several reflectors may also be disposed between the receive lens 2034 and the receiver 2032. In some other embodiments, several reflectors may be disposed between the receive lens 2034 and the lens group 202, and between the transmit lens 2033 and the lens group 202. An implementation in which reflectors are disposed between components in the distance measurement system to adjust an optical path is not limited in this embodiment of this application. In the foregoing embodiment in which the reflector is disposed, not only an optical path can be changed according to an actual requirement to adapt to an actual application, but also space of the distance measurement system can be properly used after the optical path is changed. This further reduces the size of the distance measurement module 203.

For example, as shown in FIG. 10, a first reflector is disposed between the transmit lens 2033 and the laser 2031, and the first reflector is configured to reflect, to the transmit lens 2033, the laser light emitted by the laser 2031. The first reflector includes two planar reflectors: a third planar reflector 205a and a fourth planar reflector 205b. Laser light is transmitted by the third planar reflector 205a to the fourth planar reflector 205b, and then transmitted to the transmit lens 2033.

Therefore, the first reflector is disposed between the transmit lens and the laser, so that an optical path between the transmit lens and the laser can be folded. This reduces a size of the distance measurement system, and facilitates miniaturization of the distance measurement system.

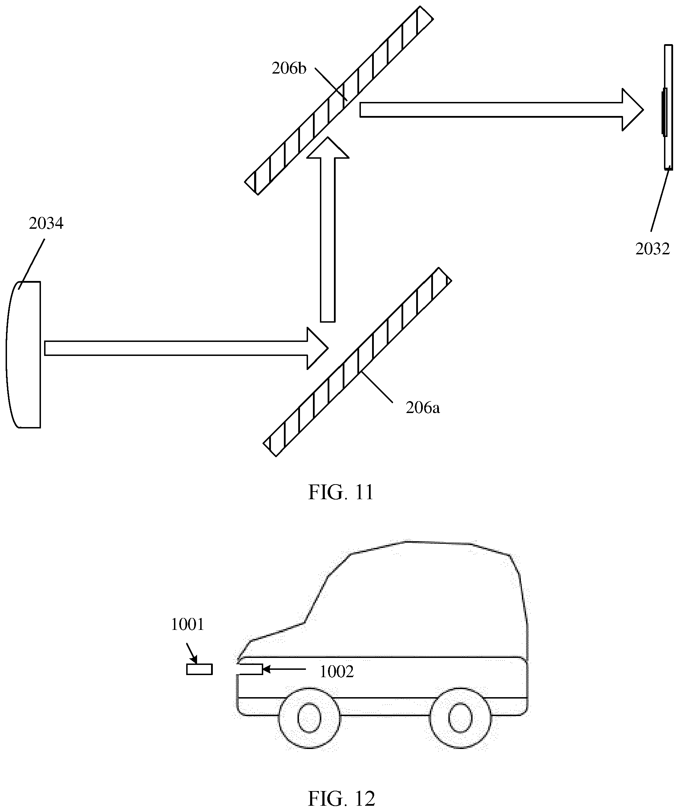

As shown in FIG. 11, a second reflector is disposed between the receive lens 2034 and the receiver 2032, and the second reflector is configured to reflect, to the receiver 2032, reflected light that passes through the receive lens 2034. The second reflector includes two planar reflectors: a fifth planar reflector 206a and a fourth planar reflector 206b. Reflected light is transmitted by the fifth planar reflector 206b to the sixth planar reflector 206a, and then transmitted to the receiver 2032.

In this way, the first reflector is disposed between the receive lens and the receiver, so that an optical path between the receive lens and the receiver can be folded. This can reduce a size of the distance measurement system, and facilitates miniaturization of the distance measurement system.

A quantity of lasers and locations of the lasers 2031 are not limited in this embodiment of this application. For example, there are three lasers 2031 in total in FIG. 6. These lasers 2031 may be disposed towards the center of the transmit lens 2033. Therefore, the directions of the lasers 2031 may have a specific angle difference, and the laser light emitted by the laser 2031 may not be parallel, but approaches the center of the transmit lens 2033.

A quantity of receivers and locations of the receivers are not limited in this embodiment of this application. There may be one or more receivers 2032. For example, there is one receiver 2032 in FIG. 6.

In some embodiments, the receiver 2032 may be in a one-to-one correspondence with the laser 2031, so that laser light emitted by each laser 2031 is received by a corresponding receiver 2032. A location of the receiver 2032 may be determined by testing the laser light emitted by the laser 2031.

For example, in a mounting and debugging process or a factory debugging process of the distance measurement system, a debugging personnel may transmit laser light through the laser 2031, and the laser light reaches the measured object after passing through the transmit lens 2033 and the lens group 202. Then, the reflected light reflected by the measured object reaches a circuit board where the receiver 2032 is located after passing through the lens group 202 and the receive lens 2034. The debugging personnel may detect a location of the reflected light on the circuit board through a photosensitive detection device. Finally, the debugging personnel may change conditions such as a type of the measured object and an angle of the lens group 202, and repeat the foregoing process of detecting the location of reflected light, to comprehensively consider the location of reflected light, so as to determine the location of the receiver 2032 based on the location of the reflected light.

It may be understood that the PCB board on which the laser 2031 is mounted and the PCB board on which the receiver 2032 is mounted may not be a same PCB board, or may be a same PCB board. This is not limited in this embodiment of this application. A plurality of lasers 2031 may be disposed on one PCB board. A quantity of lasers 2031 is not limited in this embodiment of this application. A plurality of receivers 2032 may be disposed on one PCB board. A quantity of receivers 2032 is not limited in this embodiment of this application.

In some embodiments, the distance measurement module 203 may further include a processing module. The processing module is connected to the laser 2031 and the receiver 2032, and is configured to calculate a distance between the distance measurement module 203 and the measured object 204 according to a case in which the laser 2031 transmits the laser light and the receiver 2032 receives the reflected light. The processing module may be designed to calculate the distance between the distance measurement module 203 and the measured object 204 by using a laser distance measurement (laser distance measurement) method. The laser distance measurement method may include a pulse method, a phase method, and the like. In some embodiments, the processing module may be specifically designed to calculate the distance between the distance measurement module 203 and the measured object 204 by using a calculation method: the pulse method. A calculation formula of the pulse method may be:

$$D = \frac{ct}{2}$$

D is the distance between the distance measurement module 203 and the measured object 204, c is a speed of light, and t is a time difference between a time when the laser 2031 emits laser light and a time when the receiver 2032 receives corresponding reflected light. In actual application, the speed of light may be 300,000 km/s or another value. This is not specifically limited in this embodiment of this application.

In actual application, the laser distance measurement method performed by the processing module may be finely adjusted based on an actual situation. This is not specifically limited in this embodiment of this application. The laser distance measurement method performed by the processing module is an implementation or an example of calculating, by the processing module, the distance between the distance measurement module 203 and the measured object 204. In actual application, alternatively, the processing module may be designed to calculate the distance between the distance measurement module 203 and the measured object 204 by using another calculation method such as a phase method. A design of the processing module is not specifically limited in this embodiment of this application.

In some embodiments, the processing module may be an element such as a microprocessor, a central processing unit, a main processor, a single-chip microcomputer, a controller, or an application-specific integrated circuit (application specific integrated circuit, ASIC), and is connected to the laser 2031 and the receiver 2032 through interfaces and lines, to execute various types of digital storage instructions. Therefore, the distance between the distance measurement module 203 and the measured object 204 is calculated according to an algorithm.

In some embodiments, the processing module may be mounted on a circuit board on which the receiver is located. The processing module may implement the foregoing distance calculation method in a form of a simple circuit. Details are not described in this embodiment of this application.

In some embodiments, the distance measurement system provided in this embodiment of this application may further include a housing. The housing is mounted on an autonomous driving vehicle, and the distance measurement module 203, the lens group 202, and the turntable 201 are all disposed in the housing. In addition, the housing may be provided with a notch for emitting laser light and for entering reflected light.

In some embodiments, as shown in FIG. 12, a groove 1002 may be disposed on an autonomous driving vehicle, and a distance measurement system with a housing may be mounted in the groove 1002. It may be understood that a plurality of openings may be disposed on the groove 1002, so that each component in the autonomous driving vehicle may pass through the groove 1002 and be connected to the distance measurement system 1001 through various interfaces or lines.

In some other embodiments, the distance measurement system may alternatively be mounted on the autonomous driving vehicle by disposing a screw hole on the housing and by using a fastening function of a screw. In actual application, components in the distance measurement system, for example, the distance measurement module 203, the lens group 202, and the turntable 201, may be mounted on the autonomous driving vehicle in a proper manner based on an actual situation. A specific mounting method of the distance measurement system is not limited in this embodiment of this application.

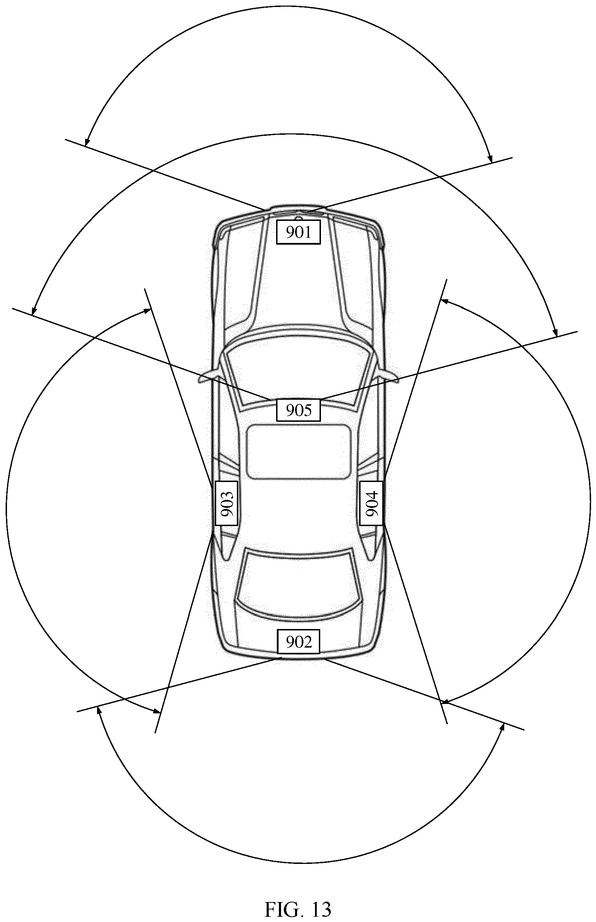

At least one distance measurement system in the foregoing embodiments may be disposed on the autonomous driving vehicle. For example, an embodiment of this application provides an autonomous driving vehicle. As shown in FIG. 13, the autonomous driving vehicle includes five distance measurement systems and a vehicle body. The five distance measurement systems are respectively a distance measurement system 901, a distance measurement system 902, a distance measurement system 903, a distance measurement system 904, and a distance measurement system 905. In some embodiments, structures of the distance measurement system 901, the distance measurement system 902, the distance measurement system 903, the distance measurement system 904, and the distance measurement system 905 are similar to those of the distance measurement system in the foregoing embodiments. An internal structure of the distance measurement system is not described again in this embodiment of this application.

As shown in FIG. 13, the distance measurement system 901 is mounted at a head of a vehicle body, the distance measurement system 902 is mounted at a rear of the vehicle body, the distance measurement system 903 is mounted on a left side of the vehicle body, the distance measurement system 904 is mounted on a right side of the vehicle body, and the distance measurement system 905 is mounted on a top of the vehicle body. Therefore, the five distance measurement systems mounted on the vehicle body can cover surrounding of the autonomous driving vehicle, and can detect in time, an object close to the autonomous driving vehicle, for example, another vehicle or an obstacle.

In some embodiments, the autonomous driving vehicle may be an engine-driven vehicle, or may be a new energy vehicle driven by an electric motor. In actual application, the autonomous driving vehicle may be a hybrid electric vehicle driven by both an engine and an electric motor. The autonomous driving vehicle is not specifically limited in this embodiment of this application.

In some embodiments, an autonomous driving system is further disposed on the autonomous driving vehicle. The autonomous driving system may be connected to the distance measurement system 901, the distance measurement system 902, the distance measurement system 903, the distance measurement system 904, and the distance measurement system 905. The autonomous driving system may receive distances measured by the five distance measurement systems, and then determine a traveling solution of the autonomous driving vehicle based on the distances, to implement autonomous driving. For example, if there is a pedestrian in front of the autonomous driving vehicle, when the autonomous driving vehicle does not collide with the pedestrian, the distance measurement system 901 can measure a distance between the autonomous driving vehicle and the pedestrian, and transmit the distance to the autonomous driving system. After receiving the distance, the autonomous driving system determines, based on the distance, that the travelling solution of the autonomous driving vehicle is emergency braking, so that under control of the autonomous driving system, the vehicle can brake in time to avoid a collision with the pedestrian.

In some embodiments, the autonomous driving system may be specifically connected to the distance measurement system 901, the distance measurement system 902, the distance measurement system 903, the distance measurement system 904, and the distance measurement system 905 through conducting wires, signal transmission lines, Bluetooth, Wi-Fi, or the like. A manner of connecting the autonomous driving system to the distance measurement system is not limited in this embodiment of this application.

In this embodiment of this application, a driver assistance system may include but is not limited to adaptive cruise control, a lane keeping assistance system, an automatic parking assistance system, a braking assistance system, a reversing assistance system, and a driving assistance system. The driver assistance system may be connected to the distance measurement system. A manner of connecting the driver assistance system to the distance measurement system is not limited in this embodiment of this application. The driver assistance system may receive a distance measured by the distance measurement system, and then determine a traveling solution of an assisted vehicle based on the distance, to implement driver assistance. The adaptive cruise control is used as an example. After measuring a distance to a vehicle ahead, the distance measurement system sends the distance to the driver assistance system. After receiving the distance, the driver assistance system compares the distance with a vehicle distance set by the adaptive cruise control. If the distance is less than the vehicle distance, the driver assistance system controls the vehicle to brake; or if the distance is greater than the vehicle distance, the driver assistance system controls the vehicle to accelerate, so that the vehicle can implement adaptive cruise control.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A distance measurement system, comprising a scanning module, a distance measurement module, and a transmit lens and a receive lens that are disposed between the scanning module and the distance measurement module, wherein

   the distance measurement module is configured to: transmit laser light to the scanning module through the transmit lens, and receive, through the receive lens, reflected light transmitted by the scanning module;
   the scanning module comprises a moving component and a lens group, wherein the moving component is configured to drive the lens group to perform scanning, and the lens group is further configured to receive reflected light of a measured object in an environment of the distance measurement system, and transmit the reflected light to the distance measurement module; and
   the transmit lens is embedded into the receive lens, and a principal optical axis of the transmit lens is separated from a principal optical axis of the receive lens.

2. The distance measurement system according to claim 1, wherein the principal optical axis of the transmit lens is parallel to that of the receive lens.

3. The distance measurement system according to claim 1 or 2, wherein the transmit lens and the receive lens are integrally formed through mold pressing.

4. The distance measurement system according to claim 1 or 2, wherein an opening is provided on the receive lens, and the transmit lens is connected to the opening of the receive lens in an adhesive manner.

5. The distance measurement system according to any one of claims 1 to 4, wherein the distance measurement module comprises a laser and a receiver, the laser is configured to emit laser light to the transmit lens, the receiver is configured to receive reflected light transmitted by the receive lens, and the laser and the receiver are located on a same side of the lens group.

6. The distance measurement system according to claim 5, wherein the laser is located at a focus position of the transmit lens, and the transmit lens is configured to convert the laser light emitted by the laser into parallel light rays; and
   the receiver is located at a focus position of the receive lens, and the receive lens is configured to focus the reflected light transmitted by the scanning module.

7. The distance measurement system according to claim 5 or 6, wherein one or more first reflectors are disposed between the transmit lens and the laser, and the first reflector is configured to fold an optical path between the laser and the transmit lens, and reflect, to the transmit lens, the laser light emitted by the laser.

8. The distance measurement system according to any one of claims 5 to 7, wherein one or more second reflectors are disposed between the receive lens and the distance measurement module, and the second reflector is configured to fold an optical path between the receive lens and the receiver, and reflect, to the receiver, reflected light that passes through the receive lens.

9. The distance measurement system according to any one of claims 6 to 8, wherein there are one or more lasers, and the lasers are surface-mounted on a same circuit board.

10. The distance measurement system according to any one of claims 6 to 9, wherein there are one or more receivers, and the receivers are surface-mounted on a same circuit board.

11. The distance measurement system according to any one of claims 6 to 10, further comprising a processing module, wherein the processing module is signal-connected to the laser and the receiver; the processing module is configured to calculate a distance between the distance measurement module and the measured object based on the laser light emitted by the laser and the reflected light received by the receiver.

12. The distance measurement system according to any one of claims 1 to 11, wherein the lens group comprises one or more reflectors.

13. A vehicle, comprising a vehicle body and the distance measurement system according to any one of claims 1 to 12, wherein the distance measurement system is disposed on the vehicle body.

14. The vehicle according to claim 13, wherein the distance measurement system is disposed at a head, a rear, a body side, or a roof of the vehicle body.

15. The vehicle according to claim 13 or 14, wherein the vehicle further comprises an autonomous driving system, the autonomous driving system is signal-connected to the distance measurement system, and the autonomous driving system is configured to perform autonomous driving based on a distance measured by the distance measurement system.

FIG. 1a

FIG. 1b

FIG. 1c

FIG. 1d

FIG. 1e

200 {
201

202

203

204

FIG. 2

202

203

204

FIG. 3a

202

203

204

FIG. 3b

202a

203

204

202b

FIG. 3c

FIG. 4

FIG. 5

FIG. 6

FIG. 7

FIG. 8

FIG. 8a

FIG. 9

2035

2031

2033

FIG. 9a

205b

2031

2033

205a

FIG. 10

206b

2034

206a

2032

FIG. 11

1001

1002

FIG. 12

FIG. 13

## INTERNATIONAL SEARCH REPORT

| International application No. |
|---|
| **PCT/CN2020/080508** |

### A. CLASSIFICATION OF SUBJECT MATTER

G01S 17/08(2006.01)i;  G01S 7/481(2006.01)i

According to International Patent Classification (IPC) or to both national classification and IPC

### B. FIELDS SEARCHED

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNPAT, CNKI, EPODOC, WPI: 华为, 胡驰昊, 晏蕾, 熊伟, 激光, 雷达, 测距, 扫描, 透镜, 反射, 嵌入, 嵌设, 发射, 接收, 旋转, laser, radar, distance, measure, scan, lens, reflection, echo, embed, insert, receive, rotate

### C. DOCUMENTS CONSIDERED TO BE RELEVANT

| Category* | Citation of document, with indication, where appropriate, of the relevant passages | Relevant to claim No. |
|---|---|---|
| X | CN 108710134 A (SUZHOU UNION SENSOR TECHNOLOGY CO., LTD.) 26 October 2018 (2018-10-26)<br>description, paragraphs [0004]-[0025], figure 1 | 1-15 |
| A | CN 108710118 A (BEIJING DAHAN ZHENGYUAN TECHNOLOGY CO., LTD.) 26 October 2018 (2018-10-26)<br>entire document | 1-15 |
| A | CN 204789995 U (NORTHWEST INSTRUMENT SHANGHAI CO., LTD. et al.) 18 November 2015 (2015-11-18)<br>entire document | 1-15 |
| A | CN 106501810 A (NORTHWEST INSTRUMENT SHANGHAI CO., LTD. et al.) 15 March 2017 (2017-03-15)<br>entire document | 1-15 |
| A | CN 108646232 A (OSIGHT PHOTOELECTRIC TECHNOLOGY CO., LTD.) 12 October 2018 (2018-10-12)<br>entire document | 1-15 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 November 2020** | **21 December 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/080508**

**C.    DOCUMENTS CONSIDERED TO BE RELEVANT**

| Category* | Citation of document, with indication, where appropriate, of the relevant passages | Relevant to claim No. |
|---|---|---|
| A | CN 108445467 A (OSIGHT PHOTOELECTRIC TECHNOLOGY CO., LTD.) 24 August 2018 (2018-08-24)<br>entire document | 1-15 |
| A | US 2018372847 A1 (APPLE INC.) 27 December 2018 (2018-12-27)<br>entire document | 1-15 |

## INTERNATIONAL SEARCH REPORT
### Information on patent family members

International application No.

**PCT/CN2020/080508**

| Patent document cited in search report | | | Publication date (day/month/year) | Patent family member(s) | | | Publication date (day/month/year) |
|---|---|---|---|---|---|---|---|
| CN | 108710134 | A | 26 October 2018 | CN | 208459595 | U | 01 February 2019 |
| CN | 108710118 | A | 26 October 2018 | None | | | |
| CN | 204789995 | U | 18 November 2015 | None | | | |
| CN | 106501810 | A | 15 March 2017 | None | | | |
| CN | 108646232 | A | 12 October 2018 | None | | | |
| CN | 108445467 | A | 24 August 2018 | None | | | |
| US | 2018372847 | A1 | 27 December 2018 | None | | | |

Form PCT/ISA/210 (patent family annex) (January 2015)